# EUROPEAN PATENT APPLICATION

(11) **EP 3 336 524 A1**
(43) Date of publication of application: **20.06.2018**
(21) Application number: 16204934.0
(22) Date of filing: 19.12.2016
(51) Int. Cl.: G01N 21/65

(54) **SUPERCRITICAL ANGLE RAMAN (SAR) MICROSCOPY**

(71) Applicant: Universität Zürich, 8006 Zürich (CH)
(72) Inventor: SEEGER, Stefan, CH-8057 Zürich (CH); SERRANO, Diana, CH-8057 Zürich (CH)
(74) Representative: Schmauder & Partner AG Patent- & Markenanwälte VSP

(57) **Abstract**

A method of acquiring a Raman signal from a sample region, wherein the sample region is embedded in a first medium having a first refractive index (n₁) and is located near an interface between the first medium and a second medium having a second refractive index (n₂), and wherein n₂ > n₁, comprises the steps of:
- illuminating the sample region with incident light having a basic wavelength (λ₀), whereby inelastically scattered light having a scattered wavelength (λ) with λ ≠ λ₀ is formed, and
- collecting a portion of the inelastically scattered light onto a light detector to obtain said Raman signal.

In order to obtain surface selective information with nanometre resolution, it is proposed to selectively obtain said Raman signal from an inelastically scattered light portion that is directed into a supercritical angle region (π/2 > ϑ > ϑ_{c}) of the second medium, wherein ϑ_{c} = arcsin (n₁/n₂).

A system for acquiring such Raman signals has collecting means comprising means for selectively collecting an inelastically scattered light portion that is directed into the supercritical angle region of the second medium.

## Description

### Field of the invention

The present invention relates to a method and a system for acquiring a Raman signal from a sample region near an interface region between two media.

### Background of the invention

Raman scattering is a straight forward spectroscopic method to characterize complex molecular systems. It gathers rich chemical, structural and functional information, providing insight to central issues in chemical physics¹, biophysics² and material sciences³. Weak signal levels result from the typically low Raman scattering cross-sections, in the range of 10⁻²⁹ - 10⁻³¹ cm^{2 4,5}. Nevertheless, the advances in the field of optical microsco-py⁶ currently allow the exploitation of the spontaneous Raman scattering mechanism for investigating biological macromolecules, single cells and tissues⁷⁸. The resolution of classical confocal Raman microscopy is diffraction limited, the signal to noise and signal to background ratios remaining the most challenging issues for a large application of this technique⁹. In this context, alternative Raman modalities have risen during the last years. These techniques successfully achieve several-fold amplification of the Raman scattered signals. Among them, two main approaches can be distinguished including nonlinear or coherent Raman spectroscopy (CRS)¹⁰, which takes advantage of nonlinear excitation schemes, and surface plasmon related methods such as the extensively used surface-enhanced Raman scattering (SERS)¹¹. SERS and related techniques provide ultra-high sensitivity and surface sensitive nanometre resolution. Despite the prominent scientific output of the amplified or enhanced Raman modalities¹²⁻¹⁷, the development of spontaneous Raman methods towards the nanoscale detection is far from lacking interest. Surface-enhanced Raman techniques present some drawbacks. The complex electromagnetic enhancement mechanism often leads to spectrally modified molecular fingerprints. It is often observed that the spectral content slightly varies from substrate to substrate¹⁸, and even within the same substrate depending on the SERS hotspot micro-environment¹⁹. In addition, the necessary close vicinity of metallic structures is likely to interfere in many chemical and biological processes²¹, limiting the use of SERS for some investigations. On the other hand, coherent Raman scattering has been demonstrated very efficiently for dynamical imaging^{21,22}. However, it does not allow investigating broad spectroscopic signatures and it requires complex optical pumping schemes with high-peak-power laser pulses²³. Such pulses risk damaging the sample under investigation, which is particularly critical in the case of biologically active specimens²⁴. Thus, spontaneous Raman spectroscopy remains a versatile and particularly low-invasive Raman modality, which has the ability to provide complete, consistent and reproducible spectroscopic information from a large variety of systems. Among the very few techniques that have so far enabled high-resolution spontaneous Raman investigations, total internal reflection (TIR) Raman spectroscopy^{25,26}, using evanescent wave excitation, has shown reasonably good performance.

In view of the above, it would be desirable to provide an improved Raman scattering method that does not need to rely on non-linear excitation or surface enhanced amplification but nonetheless provides nanometre resolution.

### Summary of the invention

It has now been found that the above object can be achieved by means of a method and an apparatus as defined in the independent claims.

According to one aspect of the invention, there is provided a method of acquiring a Raman signal from a sample region, wherein the sample region is embedded in a first medium having a first refractive index (n₁) and is located near an interface between the first medium and a second medium having a second refractive index (n₂), and wherein n₂ > n₁, the method comprising the steps of:
- illuminating the sample region with incident light having a basic wavelength (λ₀), whereby inelastically scattered light having a scattered wavelength (λ) with λ ≠ λ₀ is formed, and
- collecting a portion of the inelastically scattered light onto a light detector to obtain said Raman signal,
said Raman signal being selectively obtained from an inelastically scattered light portion that is directed into a supercritical angle region (π/2 > ϑ > ϑ_{c}) of the second medium, wherein ϑ_{c} = arcsin (n₁/n₂).

According to another aspect of the invention, there is provided a system for acquiring a Raman signal from a sample region, wherein the sample region is embedded in a first medium having a first refractive index (n₁) and is located near an interface between the first medium and a second medium having a second refractive index (n₂), and wherein n₂ > n₁, the system comprising:
- means for maintaining at a predefined position and orientation i) the first medium including the sample region embedded therein, ii) the second medium, and iii) the interface located there between;
- means for illuminating the sample region with incident light having a basic wavelength (λ₀), whereby inelastically scattered light having a scattered wavelength (A) with λ ≠ λ₀ is formed:
- means for collecting a portion of the inelastically scattered light onto a light detector and obtaining therefrom said Raman signal; and
- means for selectively rejecting elastically scattered light having a scattered wavelength λ₀ from reaching the light detector.

The method according to the present invention may also be referred to as Supercritical Angle Raman (SAR) microscopy. It constitutes a near-field based powerful alternative to carry out surface-sensitive non-amplified Raman scattering investigations with nanometre resolution. In the following, the terms "SAR" and "UAR" will be used for "Supercritical Angle Raman" and "Undercritical Angle Raman", respectively.

As generally known, the basic embodiment of Raman spectroscopy involves illuminating the sample region with substantially monochromatic incident light having a basic wavelength (λ₀), which conveniently is generated with an appropriate laser source. However, it shall be understood that other schemes involving additional irradiation with light at selected other wavelengths are also included in the present invention.

In many embodiments of Raman spectroscopy, the signal stems from inelastically scattered light having a scattered wavelength (λ) with λ > λ₀, which is also called "Stokes" scattering. However, it shall be understood that schemes using inelastically scattered light having a scattered wavelength (λ) with λ < λ₀, which is also called "anti-Stokes" scattering, are also included in the present invention.

Means for selectively rejecting the elastically scattered (Rayleigh) light are generally known. For example, they can consist of a dichroic beam splitter configured to selectively reflect light with wavelength λ₀.

For dipole emitters embedded in a medium of refractive index n₁ in close vicinity of a second medium of refractive index n₂ > n₁, an important portion of the radiated power takes place at angles exceeding the critical angle of total internal reflection^{27,28} given by θ_{c} = arcsin(n₂/n₁).

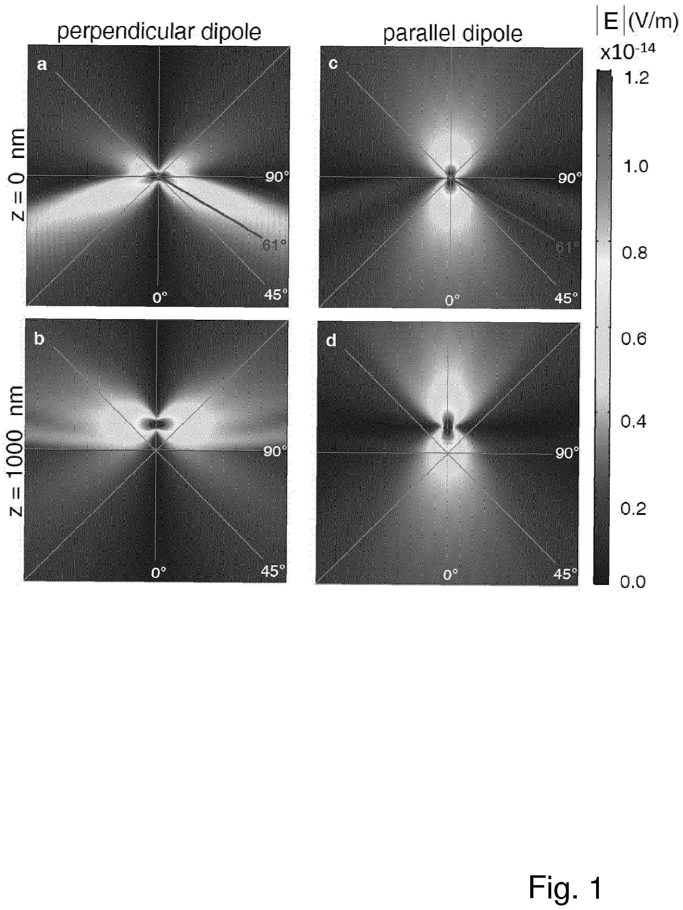

The radiation emitted at supercritical angles is exponentially dependent on the distance from the emitter to the refractive index discontinuity as well as on the dipole's relative orientation²⁹. This is displayed in Fig. 1 for the case of a dipole emitter close to a water (n₁=1.333) / glass (n₂=1.523) interface. The supercritical radiation, often referred to as "forbidden light" is due to the electromagnetic coupling of the emitter's near-field with the high refractive index medium^{27,29} and it is practically extinguished after a wavelength distance. The consequence is a strong axial confinement to the refractive index discontinuity. Therefore, the selective collection of forbidden light provides a direct insight into surface bound specimens and boundaries. This principle has been successfully exploited within the field of fluorescence microscopy for the detection of dye-labelled mole-cules³⁰ giving rise to the method known as 'supercritical angle fluorescence (SAF) mi-croscopy³¹. It is equally used in super-resolution techniques derived from SAF such as 3D-SAF(Ref) and 'direct optical nanoscopy with axially localized detection' (DONALD)³². However, up to date, the principle had never been applied to Raman scattering collection. The extension of the principle from label-based fluorescence to Raman scattering investigations constitutes an important step forward in the field of high-resolution microscopy and surface science. The intrinsic structural and functional spectroscopic information contained in the Raman spectra, not accessible through dye-labelled fluores-cence investigations, is crucial in the aim of gaining understanding about complex biochemical surface phenomena such as protein adsorption or aggregation³⁰.

Advantageous embodiments are defined in the dependent claims.

According to one embodiment of the method (claim 2), the Raman signal is obtained in a spatially selective manner, thereby providing information about spatially resolved portions of the sample region. According to a corresponding embodiment of the system (claim 10), the first collecting means comprise spatially selective detection means. Such means are generally known from the field of imaging and may be configured, for example, as single avalanche photodiode arrays.

According to another embodiment of the method (claim 3), the Raman signal is obtained in a spectrally selective manner, thereby providing spectroscopic information about the sample region. According to a corresponding embodiment of the system (claim 9), the first collecting means comprise spectrally selective detection means. Such means are generally known from the field of spectroscopy and may be configured, for example, as a low noise CCD camera, preferably a cooled CCD camera. Suitable optical transfer means for directing the Raman signal onto the camera include, for example, an appropriate optical multimode fibre.

According to a further embodiment of the method (claim 4), the monochromatic light is generated with a continuous wave laser operating with an output intensity of about 0.1 to about 100 mW. As generally known from Raman spectroscopy, the illuminating light is generally selected in the visible to near infrared (NIR) spectral range, particularly in the red spectral range. In one embodiment, the laser operates at a wavelength of about 600 to 650 nm, for example around 630 to 640 nm. According to a corresponding embodiment of the system (claim 15), the illuminating means comprise a power tunable laser, preferably a diode laser.

According to yet another embodiment (claim 5), the method further comprises acquiring an additional optical signal from the sample region, wherein said additional optical signal is selectively obtained from an inelastically scattered additional light portion that is directed into an undercritical angle region (ϑ_{c} > ϑ > 0) of the second medium. The acquisition of this additional optical signal, which as explained elsewhere is not a near field signal, can provide useful reference information for the analysis and interpretation of the near field Raman signal collected in the supercritical angle region.

Although the method of the present invention does not require any type of resonant excitation, it is nonetheless possible to select the basic wavelength (λ₀) so as to resonantly excite a species of interest contained in the sample region (claim 6).

According to an advantageous embodiment of the system (claim 8), the first collecting means comprise a reflector configured as a ring section of a parabola having a vertex, a concave face and a convex face, the reflector being arranged adjacent to the second medium with the vertex substantially coinciding with the sample region and with the concave face directed away from the interface, whereby a collimated light ring is formed. As explained in more detail below, such an arrangement allows for selective collection of the desired SAR signal, and particularly for the necessary discrimination against the UAR signal.

According to a further embodiment of the system (claim 11), the collecting means further comprise second means for collecting an inelastically scattered additional light portion that is directed into an undercritical angle region (ϑ_{c} > ϑ > 0) of the second medium and obtaining therefrom an additional optical signal, i.e. a UAR signal. Such a system may be called a "simultaneous near-field and far-field hybrid Raman-fluorescence microscope. According to an advantageous embodiment (claim 12), the second collecting means comprise a multilens system having an optical axis, the multilens system being arranged adjacent to the second medium with the optical axis substantially intersecting the sample region and being oriented substantially perpendicular to the interface, whereby a collimated light bundle is formed.

According to another embodiment (claim 13), the system further comprises reflector means configured and positioned in such manner as to selectively reflect the collimated light bundle while allowing the collimated light ring to pass. In particular, the reflector means can be configured as a small reflector which is confined in the central portion of the collimated light bundle corresponding to the UAR signal and which does not obstruct the peripheral collimated light ring corresponding to the SAR signal.

According to one embodiment of the system (claim 14), the first medium is a transparent liquid, preferably an aqueous solution, and the second medium is a transparent solid, preferably glass.

### Brief description of the drawings

The above mentioned and other features and objects of this invention and the manner of achieving them will become more apparent and this invention itself will be better understood by reference to the following description of various embodiments of this invention taken in conjunction with the accompanying drawings, wherein are shown:
- Fig. 1:: Angular distribution of the radiation emitted by a punctual incoherent dipole located at a distance "z" of a water/glass interface (θ_{c} = 61.1 °). **a.** Dipole oriented perpendicular to the interface at z=0. In this case, a large amount of the radiated power is emitted at high angles towards the lower half-space. **b.** For z=1000 nm (z > λ = 632 nm) the almost totality of the emission takes place towards the upper half-space due to total internal reflection **c.** Dipole oriented parallel to the interface at z=0 and **d**. z=1000 nm. Radiation patterns from ensembles of randomly oriented dipoles are computed by addition of parallel and perpendicular dipoles²⁹.

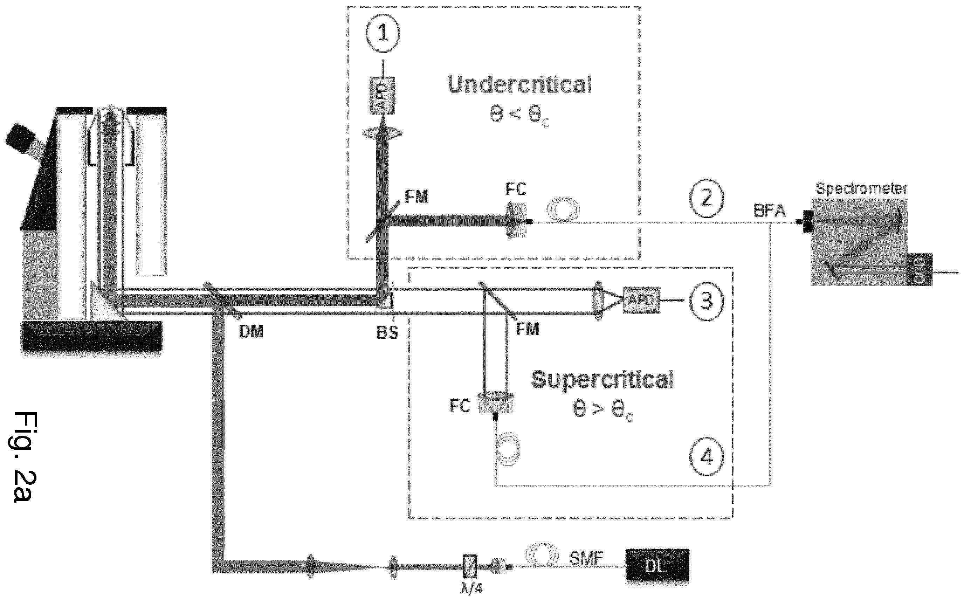

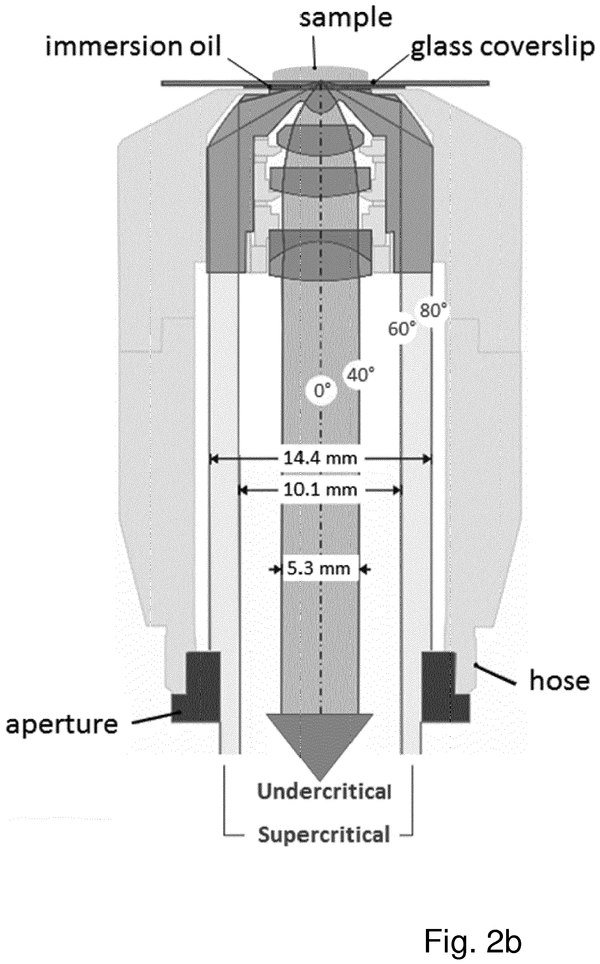

- Fig. 2:: **a.** Experimental setup. A total of four acquisition channels are available: undercritical imaging (channel 1), undercritical spectral analysis (channel 2), supercritical imaging (channel 3) and supercritical spectral analysis (channel 4). The spectral analysis channels (2 and 4) are primarily conceived for vibrational spectroscopy. DL states for diode laser, DM for dichroic mirror; FM for flip mirror, BS for beam splitter; FC for fibre coupler; SMF for single mode optical fibre; BFA for bifurcated fibre assembly; APD for avalanche photodiode and CCD for charged coupled device. b. Detail of the custom made objective. The inner lenses focus the excitation and collect radiation between 0° and 40°. The parabolic collector gathers supercritical radiation, which is emitted at angles higher than 61 ° for a water/glass refractive index discontinuity.

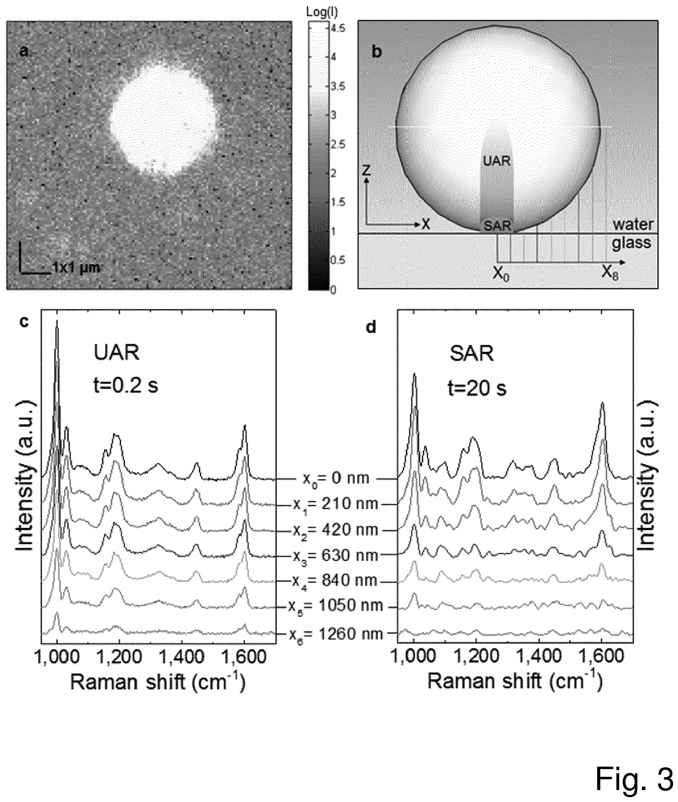

- Fig. 3:: Simultaneous UAR and SAR Raman imaging and spectroscopic analysis of a single polymer microsphere surrounded by water under 633 nm excitation. **a.** Microsphere of 3.3 µm average diameter found immobilized on the coverslip surface. **b.** Scheme depicting the lateral positions at which Raman spectra were acquired. The expected UAR and SAR collection volumes appear represented at the corresponding scale³³. **c.** UAR and **d.** SAR polystyrene spectra. The excitation power was set to 0.5 mW for imaging and 50 mW for spectral acquisitions. Acquisition times were chosen so that at the starting point X₀, the polystyrene Raman modes would have comparable peak intensities in both UAR and SAR collection channels.

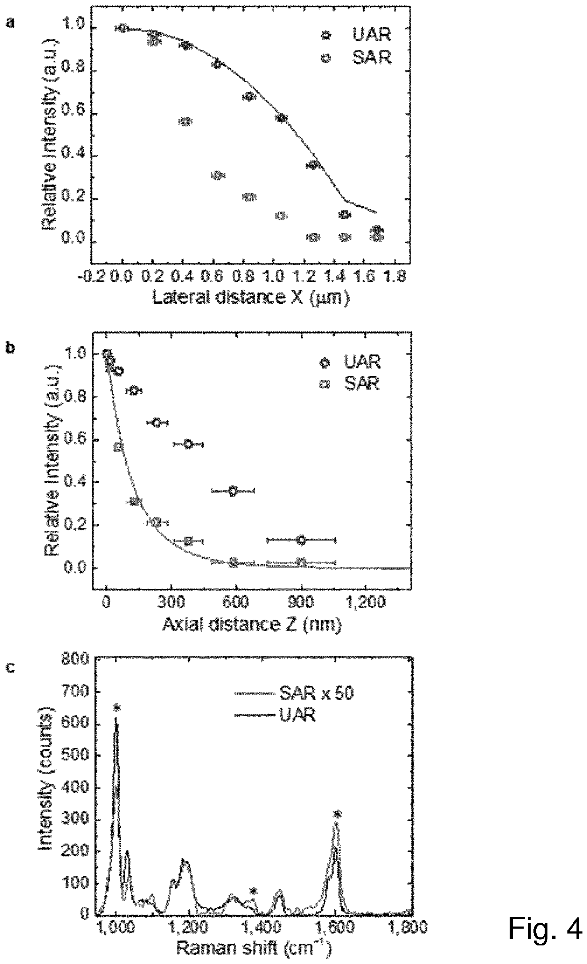

- Fig. 4:: UAR and SAR intensity evolution and compared spectral content. a. 1000 cm⁻¹ peak intensity evolution as a function of lateral displacement. The solid line represents the progressive reduction of the excited volume given by the spherical geometry. Error bars represent the experimental incertitude associated to the lateral positions, estimated in ± 40 nm. **b.** 1000 cm⁻¹ peak intensity evolution as a function of axial distance. The solid line represents the z dependent decay of the supercritical emissions for a radiation wavelength of 676 nm (1000 cm⁻¹). Error bars show the incertitude in z derived from that in x by simple geometrical calculations. c. Comparison of the UAR and SAR spectra acquired at the centre of the sphere (X₀).

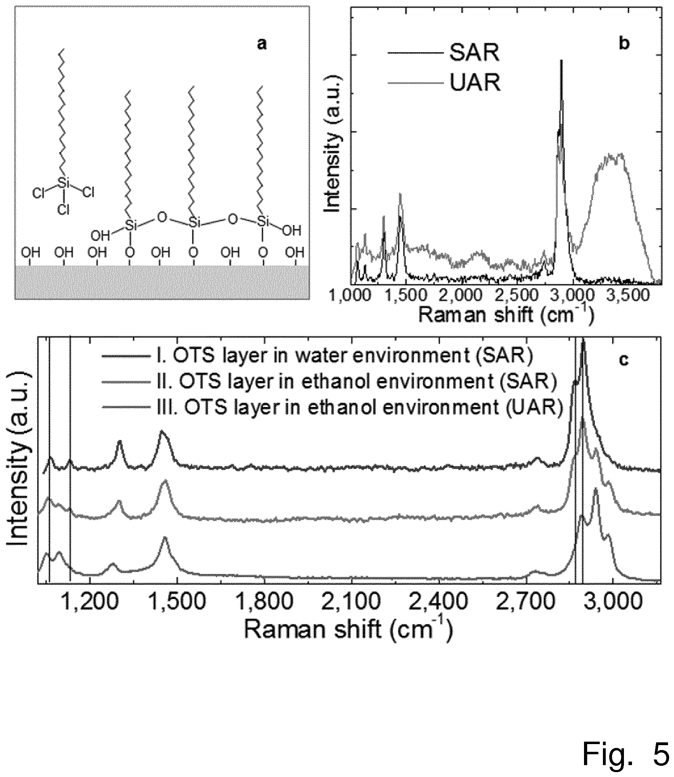

- Fig. 5:: OTS self-assembled monolayer preparation and spectroscopic investigation. **a.** Reaction leading to the formation of OTS assembled layers. OTS molecules react with the hydroxylic surface giving rise to siloxane (Si-O-Si) covalent bonds. **b.** SAR and UAR measurements of the OTS coated coverslip with water on top. c. SAR and UAR spectra of the OTS coated coverslip with ethanol on top. Vertical lines show the vibrations associated to the silane molecules. The measurements were performed with an excitation power of 50 mW and acquisition time of 10 s.

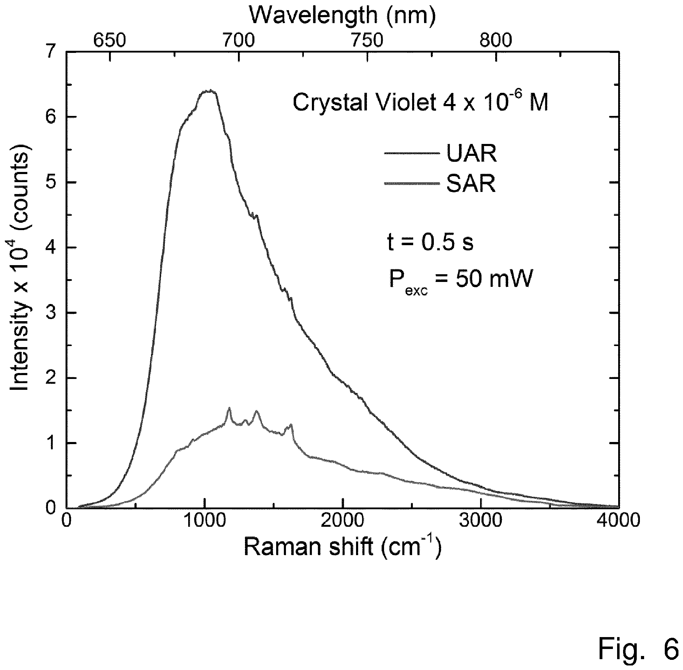

- Fig. 6:: Surface-enhance Raman Spectroscopy (SERS) of crystal violet diluted in water to 4×10⁻⁶ M. Because of the resonant excitation at 633 nm, both fluorescence emission and enhanced Raman scattering are produced and collected. The fluorescence contribution is less prominent in the SAR channel, which results in a cleaner SERS signal.

### Detailed description of the invention

### Experimental studies

### Experimental set-up

A schematic representation of the experimental setup is shown in Figs. 2a and 2b. Forbidden near-field and classical far-field Raman scattered signals, hereinafter referred to as "supercritical angle" Raman (SAR) and "undercritical angle" Raman (UAR) channels in reference to their fluorescence analogues³¹, were collected with a custom made objective consisting on a parabolic mirror and a multilens system with numerical aperture equal to 1.0³³, clear aperture diameter of 5.3 mm and effective focal length of 2.8 mm. The parabolic element collects angles between 60° and 80°. Thus, it gathers the almost totality of SAR scattering for a water/glass interface, characterized by a critical angle of 61.1°. On the other hand, the inner optics focus the excitation and collect UAR scattering between 0° and 41°. The parabolic element and multilens system are aligned to have coincident focal points. In order to maximize the focusing and collection efficiency, refractive index matched immersion oil (n∼1.5) is added between the glass coverslip and the objective. The described custom-built objective is mounted into an inverted Olympus IX71 microscope with a motorized sample scanning stage (Märzhäuser, Scanlm 120x100). The detection is carried out by an optical set-up equipped both for imaging and spectral analysis (Fig. 2a). A power tunable diode laser emitting at 633 nm (TOPTI-CA iBeam Smart, Pmax=100 mW) is used as excitation source. The laser output is coupled to a single mode fibre for mode cleaning and the linear polarization is converted to circular in order to maximize the interaction with randomly oriented dipole emitters. The excitation beam is then enlarged from 1 to 5 mm diameter before entering the objective. The inner lenses and parabolic mirror produce two concentric collimated beams which transversally appear as a 5 mm diameter circle surrounded by a 6-8 mm ring. These two beams are separated by a 45° mirror fixed on a glass window before detection (BS in Fig. 2a). For both fluorescence and Raman imaging, the beams are focused into two identical single photon avalanche photodiodes (APDs, PerkinElmer) with an active area of 180 µm (channels 1 and 3 in Fig. 2a).

For spectral analysis, the beams are injected through two identical fibre couplers into a bifurcated multimode fibre assembly with 100 µm cores and NA=0.12 (channels 2 and 4). The common end of the bifurcated fibre is connected to a spectrometer (Jobin-Ybon, iHR320) equipped with a triple grating set and a CCD camera (256x1024 pixel) cooled down to -70°C. The divergent outputs of the bifurcated fibre assembly, corresponding to the far-field undercritical and near-field supercritical inputs respectively, reach the CCD detector at two well-separated areas. Therefore, the two signals can be treated separately by the acquisition software. The imaging and spectroscopic analysis detection paths can be switched following the experimental needs by means of flip mirrors. The active area of the avalanche photodiodes and the optical fibres act as confocal apertures. Filtering of the Rayleigh scattering is performed by a dichroic beamsplitter and several long-pass spectral filters. Images were recorded with a custom-written software while LabSpec (Horiba) was used for spectral acquisitions. Images and spectra were next processed with MATLAB and Microcal Origin.

### Results

In order to investigate the surface confinement and effective collection volume of SAR, we measured the evolution of the SAR and UAR intensities along the radius of a single polymer microsphere. The microspheres were prepared in form of aqueous suspension and poured over a glass coverslip (for more information see Methods section). Once a stable microsphere leaning on the coverslip surface was identified (Fig. 3 a), the microscope objective was placed on its centre, X₀, and laterally translated by steps of 210 nm (Fig. 3 b). At every position, Raman spectra were acquired. The well-known polystyrene Raman spectrum, characterized by aromatic ring vibrations³⁴, appears both in the SAR and UAR channels (Fig. 3c and d). Nevertheless, the intensity of the SAR peaks decays faster than that of the UAR peaks. SAR peaks cannot be distinguished from the noise level after covering 1260 nm from the sphere centre, approximately 3/4 parts of the sphere radius.

In classical spontaneous Raman scattering, the Raman intensity is proportional to the number of scattering centres contributing to the signal, which directly depends on the excited volume. Therefore, progressive intensity decay is expected when moving the objective from the centre towards the edge of the sphere due to the reduction of the excited volume. Taking advantage of the spherical geometry, we estimated the portion of polymer sphere contained within the classical confocal collection volume as a spherical segments of volume πh(3a² + 3b² + h²)/6, in which h is the spherical segment thickness, here defined by the size of the laser focus at the interface, and a and b are the segment's lower and higher radii. The corresponding spherical segment volume was then calculated for every position from X₀ to X₆ (Fig. 2 b). For the last positions, X₇ and X₈, spherical cap geometry was used, in which *V* = πh²(3a - h)/3.

Despite its simplicity, this simple model gives a satisfactory description of the UAR signal decay (Fig. 4 a). The evolution of the UAR and SAR intensities with the axial distance between the sphere surface and the coverslip is displayed in Fig. 4 b. The experimental SAR signal decay is here compared with the z dependent supercritical radiation exponential decay^{35,36}. It is evidenced that the SAR signal intensity is strongly dominated by the axial distance z between the microsphere surface and the refractive index discontinuity. This contrasts with the UAR signal intensity, mostly dependent on the number of scattering centres within the collection volume. Thus, the SAR collection volume appears limited to a few hundreds of nanometres, with an intensity reduction of the order of 80% in the first 200 nm.

Interestingly, a closer look into the UAR and SAR spectra reveals noticeable differences (Fig. 4 c). The most remarkable is the relative intensity change between the 1000 cm⁻¹ and 1600 cm⁻¹ modes. Variations in this ratio are often related to the length of the polymer chains or degree of polymerization³⁷. A lower ratio is in fact related to a lower degree of polymerization. In particular, the observed ratios of 2.9 in UAR and 1.4 in SAR, might indicate a lower degree of polymerization on the sphere surface, possibly owing to polymer degradation mechanisms³⁸. In addition, some extra peaks can be distinguished in the SAR spectrum, for instance around 1380 cm⁻¹. This weak peak is most likely due to the presence of functional carboxylate groups on the sphere surface³⁹. Further investigations would be required for a conclusive explanation of the differences observed between the UAR and SAR spectra. However, the SAR ability to provide specific information about surfaces and boundaries, as well as to discriminate their contribution from the bulk, appears evident. The possibility of simultaneously collecting far-field and near-field spectral information is a quite unique feature of this technique and one of its most important advantages³². The richness of the spectroscopic information obtained through SAR is drastically boosted by the comparison. Such comparisons are not possible in total internal reflection (TIR) Raman spectroscopy²⁵ neither in SERS. As previously mentioned, in TIR, the axial confinement is assured by evanescent wave excitation so that the penetration into the sample is typically limited to a few hundreds of nanometres. In SERS, the strong enhancement effect boosts the signal arising from surface specimens and masks any spontaneous contribution from the bulk. On the other hand, spectral changes observed in SERS spectra compared to classical confocal Raman spectra obtained from the same molecular specimen or material are often difficult to interpret. Indeed, their origin is quite often attributed to the SERS substrate and the electromagnetic enhancement mechanism³⁴. In contrast, the classical far-field excitation used for SAR allows probing micron size volumes and to selectively collect reliable spectroscopic information from surface-related specimens and their environment.

### SAR detection of octadecyltrichlorosilane (OTS) self-assembled monolayers

As a straight forward application, SAR was used for detecting OTS self-assembled monolayers coated to glass coverslips (see Methods for details about the coating procedure). OTS self-assembled monolayers (Fig. 5 a) present standard thicknesses of 2.5 nm, varying slightly with the orientation of the hydrocarbon chains^{40,41}. A non-amplified Raman scattering investigation of OTS monolayers is challenging due to the intrinsically weak Raman scattered signals arising from such small structures. It can even become impossible if the scattering in the monolayer's environment is not negligible. Indeed, most former Raman studies of this system have been carried out with electromagnetic enhancement^{42,43}, and to the best of our knowledge, spontaneous Raman spectra of OTS was only reported once⁴⁴ and with a low spectral quality. The OTS coating was investigated both by SAR and UAR in several environmental conditions. The previously reported Raman spectrum of a well-organized OTS monolayer covalently bound to silica is displayed in Fig. 5 b⁴². The OTS peaks appear both in UAR and SAR spectra In the UAR spectrum, the surrounding water signature is also recorded, characterized by the O-H vibration band in the 3000-3500 cm⁻¹ region. The water background is highly suppressed in the SAR spectrum owing to the SAR axial confinement. Water is a quite favourable medium for Raman investigations as it is a low scatterer and it does not present strong peaks in the typical molecular fingerprint region (800-1600 cm⁻¹). Therefore, using a SAR collection instead of the classical confocal UAR presents advantages, although was not critical to identify the presence of the coating in this case. In contrast, the situation is quite different if OTS monolayers need to be detected in a more interfering environment. In order to probe the SAR potential in such case, we poured a generous amount of ethanol (n=1.3616) over an OTS coated coverslip. Ethanol molecules present a recognizable Raman spectrum with several strong peaks within the fingerprint region⁴⁵. The output of the UAR and SAR analysis was in this case that only the well-known vibrations of ethanol molecules could be observed in the UAR channel (Fig. 4 c III).

Thus, a classical confocal investigation of OTS monolayers would not allow confirming the presence of the coating in these experimental conditions. In contrast, the presence of the OTS coating is clear in the SAR spectrum. The ethanol contribution is also noticeable in Fig. 5c II, but it does not become dominating enough to mask the Raman peaks associated to the silane molecules on the coverslip surface (Fig. 5c I).

### SAR compatibility with other Raman techniques

Along previous sections, we have shown in detail the potential of SAR for carrying out surface selective non-amplified Raman spectroscopy investigations. However, despite the performance of the SAR collection, the inherently weak spontaneous Raman scattering mechanism can be difficult to exploit in investigations which turn to be particularly challenging. This can be the case for extremely low molecular concentrations and single molecules¹⁵. For such cases, SAR is not excluding but perfectly compatible with amplified Raman modalities. Therefore, SAR detection of SERS is trivial and can be interesting to further limit background contributions in a surface-enhance Raman spectroscopy experiment.

An example is presented here. A crystal violet dye (C₂₅H₃₀ClN₃) solution in water with a concentration of 4×10⁻⁶ M was spectrally probed using a gold-nanoparticle activated coverslip (see Methods section). Crystal Violet is resonantly excited at 633 nm⁴⁶. Therefore, without performing Raman amplification, only fluorescence emission is detected from this solution in the Raman stokes region. The several-fold amplification of the Raman signal obtained in presence of the gold nanoparticles enables Raman detection as shown in Fig. 6. Nevertheless, the enhanced Raman signal competes with the strong fluorescence emission from free crystal violet molecules in solution. This competition can be observed in the UAR spectrum in Fig. 6, in which, Raman peaks are vaguely distinguished on top of the strong and broad fluorescence band. Nevertheless, the characteristic crystal violet molecular fingerprint⁴⁷ appears clearly in the SAR spectrum. Once again, the axial selectivity of SAR provides direct insight to the surface specimens limiting the interference of background fluorescence. In conclusion, SAR detection of amplified Raman signals is experimentally straight forward and can be even advantageous to reduce background contributions. It is also remarkable that in the current status, our experimental setup might be used as a hybrid Raman-fluorescence microscope. Raman and fluorescence are spectroscopic methods which are difficult to combine in a single experiment. This incompatibility is here overcame by taking advantage of availability of two well-distinguished collection volumes, one with near-filed extension and one with classical confocal extension.

### Conclusion

In this research work we present a new Raman modality, namely Supercritical Angle Raman (SAR) microscopy, and demonstrate its ability to carry out non-amplified Raman scattering investigations with nanometre resolution, surface selectivity and improved signal to background ratio. The technique is applied to the detection of octadeciltrichlorosilane (OTS) self-assembled monolayers and shown to be compatible with other Raman modalities such as SERS.

### Methods

### Setup and processing

The custom made objective was implemented in an inverted Olympus IX71 microscope with a motorized sample scanning stage (Märzhäuser, Scanlm 120x100). Images were recorded with a Borland C++ custom written program while LabSpec (Horiba) was used for spectral aquisitions. Images and spectra were next processed with MATLAB. A constant background arising from the optical components was subtracted from both UAR and SAR spectra. For the sake of clarity SAR spectra were in addition smoothed by Adjacent Averaging with a 5 points moving window.

### Simulations

Radiating dipole simulations were carried out with the Wave Optics module of COMSOL Multiphysics. The radiation wavelength was set to 633 nm and the dipole moment to 1 Debye.

### Polystyrene microspheres sample preparation

20 µl of an aqueous suspension of Polybead Carboxylate Microspheres (Polyscience.lnc, 2.5% solids - 1.68x10⁹ particles/ml) was diluted into 50 ml of ultrapure water. Then, 200 µl of this diluted suspension were dropped into a microscope coverslip (#1, Menzel-Gldser, Thermo scientific, Inc., 25x60 mm). Areas of 75x75 µm (240x240 pixels) were first fastly scanned (0.8 ms/pixel with a pixel size of 312 nm), until a stable bead was found. A slow 9.4x9.4 µm (120x120 pixel) scan was then performed around the bead with a pixel size of 78.1 nm and a speed of 5.2 ms/pixel (i.g. Fig. 3 a), before proceeding to spectral acquisitions.

### Octadecyltrichlorosilane (OTS) self-assembled layers growth.

Fresh octadecyltrichlorosilane was obtained from Sigma Aldrich (purity ≥ 90%) and dissolved in anhydrous toluene (Fisher Scientific) to a concentration of 10 mM. Before coating, the microscope coverslips (#1, Menzel-Gldser, Thermo scientific, Inc., 25x60 mm) were cleaned with ethanol during 15 minutes in an ultrasonic bath, rinsed with ultrapure water, dried, and oxygen plasma treated for 10 minutes in order to functionalize the glass surface with hydroxyl (OH) groups. The coverslips were then immersed in the OTS/Toluene solution for 2 hours, rinsed with pure toluene and dried under nitrogen flow⁴⁰. The formation of covalently-bound organized assembled layers was confirmed by static-contact angle measurements and by the Raman analysis itself⁴¹. Water and ethanol were afterwards poured over the coated coverslips for the Raman investigations.

### SERS measurements

A glass coverslip (#1, Menzel-Gldser, Thermo scientific, Inc., 25x38 mm) was glued to the rare side of a measurement cell formed by multiple 5 mm long compartments prepared to contain liquid samples. 10 µl of a suspension of 90 nm gold nanourchins (Cyto-diagnostics, λₘₐₓ=625 nm, 5.37 10⁹ pcls/ml) in 0.1 mM Phosphate-Buffered Saline were first dropped in one of the compartments and waited until dried. 50 µl of a 10⁻⁶ M crystal violet solution in water were next poured in the same compartment. The Raman peaks rinsed just a few seconds after the crystal violet solution was added.

### References:

1. Kneipp, K. et al. Ultrasensitive chemical analysis by Raman Spectroscopy, Chem. Rev. 99, 2957-2976 (1999)
2. Puppies, G. J. et al. Studying single living cells and chromosomes by confocal Raman microspectroscopy, Nature 347, 301-303 (1990)
3. Eckmann, A. et al. Probing the Nature of Defects in Graphene by Raman Spectroscopy, Nano Lett. 12 (8), 3925-3930, (2012)
4. Penney, C. M., Goldman, L. M. & Lapp, M. Raman scattering cross-sections, Nature 235, 110-112 (1972)
5. Kneipp, K. et al. Population pumping of excited vibrational states by spontaneous surface-enhanced Raman scattering, Phys. Rev. Lett. 76 (14), 2444-2447 (1996)
6. Webb, R. H. Confocal optical microscopy, Reports on Progress in Physics 59 (3), 427-471 (1996)
7. Schuster, K. C., Reese, I., Urlaub, E., Gapes, J. R. & Lendl, B. Multidimensional Information on the Chemical Composition of Single Bacterial Cells by Confocal Raman Microspectroscopy, Anal. Chem. 72 (22), 5529-5534 (2000)
8. Hamada, K. et al. Raman microscopy for dynamic molecular imaging of living cells. J. Biomed. Opt. 13, 044027 (2008)
9. Everall, N. J. Confocal Raman microscopy: why the depth resolution and spatial accuracy can be much worse than you think. Appl. Spectrosc. 54, 1515-1520 (2000).
10. Eesley, G. (1981). Coherent Raman spectroscopy. Oxford: Pergamon Press.
11. Campion, A. & Kambhampat, P. Surface-enhanced Raman scattering, Chem. Soc. Rev. 27, 241-250 (1998)
12. Camp Jr., C. H., & Cicerone, M. T. Chemically sensitive bioimaging with coherent Raman scattering, Nature Phot. 9, 295-305 (2015)
13. Li, J. F., et al. Shell-isolated nanoparticle-enhanced Raman spectroscopy, Nature 464, 392-395 (2010)
14. Freudiger, C.W. et al. Label-Free Biomedical Imaging with High Sensitivity by Stimulated Raman Scattering Microscopy, Science 322 (19), 1857-1861 (2008)
15. Kneipp, K. et al. Single Molecule Detection Using Surface-Enhanced Raman Scattering (SERS), Phys. Rev. Lett. 78, 1667-1670 (1997)
16. Pestov, D. et al. Single-shot detection of bacterial endospores via coherent Raman spectroscopy, P. Natl. Acad. Sci. USA 205 (2), 422-427 (2008)
17. Dudovich, N., Oron, D., & Silberberg, Y. Single-pulse coherently controlled nonlinear Raman spectroscopy and microscopy, Nature 418, 512-514 (2002)
18. Lin, X., Cui, Y., Xu, Y. et al. Surface-enhanced Raman spectroscopy: substrate-related issues, Anal. Bioanal. Chem. 394, 1729-1745 (2009)
19. Tantra, R., Brown, R. J. C., & Milton, M. J. T. Strategy to improve the reproducibility of colloidal SERS, J. Raman spectrosc. 38 (11), 1469 (2007)
20. Xiu, Z., Zhang, Q., Puppala, L., Colvin, V. L. & Alvarez, P. J. J. Negligible Particle-Specific Antibacterial Activity of Silver, Nano Lett. 12, 4271-4275 (2012)
21. Saar, B. G. et al. Video-rate molecular imaging in vivo with stimulated Raman Scattering. Science 330, 1368-1370 (2010)
22. Potma, E. O., de Boeij, W. P., van Haastert, P. J. M. & Wiersma, D. A. Real-time visualization of intracellular hydrodynamics in single living cells. Proc. Natl Acad. Sci. USA 98, 1577-1582 (2001)
23. Zumbusch, A., Holtom, G. R., & Xie, S. Three-Dimensional Vibrational Imaging by Coherent Anti-Stokes Raman Scattering, Phys. Rev. Lett. 82 (20), 4142-4145 (1999)
24. Fu, Y., Wang, H., Shi, R., Cheng, J. X. Characterization of photodamage in coherent anti-Stokes Raman scattering microscopy, Opt. Express 14 (9) 3942-3951 (2006).
25. Iwamoto, R., Miya, M., Ohta, K. & Mima, S. Total internal reflection Raman spectroscopy as a new tool for surface analysis, J. Am. Chem. Soc. 102 (3), (1980), 1212-1213.
26. Woods, D. A. & Bain, C. D., Total internal reflection Raman microscopy, Analyst 137, 35-48 (2012)
27. Lukosz, W, and Kunz, R. E., Light emission by magnetic and electric dipoles close to a plane dielectric interface. I. Total radiated power, J. Opt. Soc. Am. 67 (12), 1607-1615 (1977)
28. Lukosz, W, Light emission by magnetic and electric dipoles close to a plane dielectric interface. III. Radiation patterns of dipoles with arbitrary orientation, J. Opt. Soc. Am. 69 (11), 1495-1503 (1979)
29. Novotny, L., Allowed and forbidden light in near-field optics. I. A single dipolar light source, J. Opt. Soc. Am. A 14 (1), 91-104 (1997)
30. Rabe, M. et al. On-surface aggregation of α-Synuclein at nanomolar concentrations results in two distinct growth mechanisms, ACS Chem. Neurosci. 4 (3), 408-417 (2013)
31. Winterflood, C. M., Ruckstuhl, T., Verdes, D. & Seeger, S. Nanometer axial Resolution by Three-Dimensional Supercritical Angle Fluorescence Microscopy, Phys. Rev. Lett. 105, 108103 (2010)
32. Bourg, N. et al. Direct optical nanoscopy with axially localized detection, Nature Phot. 9, 587-593 (2015)
33. Ruckstuhl, T., Verdes, D., Winterflood, C. M., & Seeger, S., Simultaneous near-field and far-field fluorescence microscopy of single molecules, Opt. Express 19 (7), 6836-6844 (2011)
34. Anema, J. R., Brolo, A. G., Felten, A., & Bittencourt, C., Surface-enhanced Raman scattering from polystyrene on gold clusters, J. Raman Spectrosc. 41, 745-751 (2010)
35. Ruckstuhl, T., Rankl, M. & Seeger, S. Highly sensitive biosensing using a supercritical angle fluorescence (SAF) instrument, Biosens. Bioelectron. 18, 1193-1199 (2003)
36. Enderlein, J., Ruckstuhl, T., & Seeger, S., Highly efficient optical detection of surface-generated fluorescence, Appl. Opt. 38, 724-732 (1999).
37. Sears, W. M., Hunt, J. L., & Stevens, J. R., Raman scattering from polymerizing styrene. I. Vibrational mode analysis, J. Chem. Phys. 75, 1589-1598 (1981)
38. Guaita, M., Chiantore, O., Costa, L., Changes in degree of polymerization in the thermal degradation of polystyrene, Polym. Degrad. Stabil. 12 (4), 315-332 (1985)
39. Suh, J. S. & Kim, J. Three distinct geometries of surface-adsorbed carboxylate groups, J. Raman Spectrosc. 29, 143-148 (1998)
40. Wang, Y. & Lieberman, M. Growth of Ultrasmooth octadecyltrichlorosilane self-assembled monolayers on SiO2, Langmuir 19, 1159-1167 (2003)
41. McGovern, M. E., Krishna, M. R. K. & Thompson, M. Role of solvent on the silanization of glass with octadecyltrichlorosilane, Langmuir 10 (10), 3607-3614 (1994)
42. Thompson, W. R. & Pemberton, J. E., Raman spectroscopy of covalently bonded alkylsilane layers on thin silica films immobilized on silver substrates, Anal. Chem. 66, 3362-3370 (1994)
43. Bryant, M. A. & Pemberton, J. E., Surface Raman Scattering of self-assembled monolayers formed from 1-alkanethiols: behavior of films at Au and comparison to films at Ag, J. Am. Chem.Soc. 113, 8284-8293 (1991)
44. Calkins, J. A., Peacock, A. C., Sazio, P. J. A., Allara, D. L., & Badding, J. V., Spontaneous waveguide Raman spectroscopy of self-assembled monolayers in silica micropores, Langmuir 27(2), 630-636 (2011)
45. Mammone, J. F., Sharma, S. K. & Nicol, M. Raman spectra of methanol and ethanol at pressures up to 100 kbar, J. Phys. Chem. 84, 3130-3134 (1980)
46. Lewis, G. N., Magel, T. T. & Lipkin, D., Isomers of crystal violet ion. Their absorption and re-emission of light. J. Am. Chem. Soc., 64 (8), 1774-1782 (1942)
47. Kleinman, S. L. et al., Single-Molecule Surface-Enhanced Raman Spectroscopy of Crystal Violet Isotopologues: Theory and Experiment, J. Am. Chem. Soc. 133 (11), 4115-4122 (2011)

## Claims

1. A method of acquiring a Raman signal from a sample region, wherein the sample region is embedded in a first medium having a first refractive index (n₁) and is located near an interface between the first medium and a second medium having a second refractive index (n₂), and wherein n₂ > n₁, the method comprising:
- illuminating the sample region with incident light having a basic wavelength (λ₀), whereby inelastically scattered light having a scattered wavelength (A) with λ ≠ λ₀ is formed, and
- collecting a portion of the inelastically scattered light onto a light detector to obtain said Raman signal,
**characterised in that**
said Raman signal is selectively obtained from an inelastically scattered light portion that is directed into a supercritical angle region (π/2 > ϑ > ϑ_{c}) of the second medium, wherein ϑ_{c} = arcsin (n₁/n₂).

2. The method according to claim 1, wherein said Raman signal is obtained in a spatially selective manner, thereby providing information about spatially resolved portions of the sample region.

3. The method according to claim 1 or 2, wherein said Raman signal is obtained in a spectrally selective manner, thereby providing spectroscopic information about the sample region.

4. The method according to one of claims 1 to 3, wherein the incident light is generated with a continuous wave laser operating with an output intensity of about 0.1 to about 100 mW.

5. The method according to one of claims 1 to 4, further comprising acquiring an additional optical signal from the sample region, wherein said additional optical signal is selectively obtained from an inelastically scattered additional light portion that is directed into an undercritical angle region (ϑ_{c} > ϑ > 0) of the second medium.

6. The method according to one of claims 1 to 5, wherein the basic wavelength (λ₀) is selected to resonantly excite a species of interest contained in the sample region.

7. A system for acquiring a Raman signal from a sample region, wherein the sample region is embedded in a first medium having a first refractive index (n₁) and is located near an interface between the first medium and a second medium having a second refractive index (n₂), and wherein n₂ > n₁, the system comprising:
- means for maintaining at a predefined position and orientation i) the first medium including the sample region embedded therein, ii) the second medium, and iii) the interface located therebetween;
- means for illuminating the sample region with incident light having a basic wavelength (λ₀), whereby inelastically scattered light having a scattered wavelength (λ) with λ ≠ λ₀ is formed;
- means for collecting a portion of the inelastically scattered light onto a light detector and obtaining therefrom said Raman signal; and
- means for selectively rejecting elastically scattered light having a scattered wavelength λ₀ from reaching the light detector;
**characterised in that** the collecting means comprise first means for selectively collecting an inelastically scattered light portion that is directed into a supercritical angle region (π/2 > ϑ > ϑ_{c}) of the second medium, wherein ϑ_{c} = arcsin (n₁/n₂).

8. The system according to claim 7, wherein the first collecting means comprise a reflector configured as a ring section of a parabola having a vertex, a concave face and a convex face, the reflector being arranged adjacent to the second medium with the vertex substantially coinciding with the sample region and with the concave face directed away from the interface, whereby a collimated light ring is formed.

9. The system according to claim 7 or 8, wherein the first collecting means further comprise spectrally selective detection means.

10. The system according to one of claims 7 to 9, wherein the first collecting means further comprise spatially selective detection means.

11. The system according to one of claims 7 to 10, wherein the collecting means further comprise second means for collecting an inelastically scattered additional light portion that is directed into an undercritical angle region (ϑ_{c} > ϑ > 0) of the second medium and obtaining therefrom an additional optical signal.

12. The system according to claim 11, wherein the second collecting means comprise a multilens system having an optical axis, the multilens system being arranged adjacent to the second medium with the optical axis substantially intersecting the sample region and being oriented substantially perpendicular to the interface, whereby a collimated light bundle is formed.

13. The system according to claim 12, further comprising reflector means configured and positioned in such manner as to selectively reflect the collimated light bundle while allowing the collimated light ring to pass.

14. The system according to one of claims 7 to 13, wherein the first medium is a transparent liquid, preferably an aqueous solution, and wherein the second medium is a transparent solid, preferably glass.

15. The system according to one of claims 7 to 14, wherein the illuminating means comprise a power tunable laser, preferably a diode laser.
